(19) Europäisches Patentamt
European Patent Office
Office européen des brevets

(11) **EP 1 689 904 B1**

(12) **FASCICULE DE BREVET EUROPEEN**

(45) Date de publication et mention
de la délivrance du brevet:
**01.08.2018 Bulletin 2018/31**

(51) Int Cl.:
***C22C 19/07*** (2006.01)     ***C03B 37/04*** (2006.01)
***C22F 1/10*** (2006.01)

(21) Numéro de dépôt: **04805861.4**

(22) Date de dépôt: **26.11.2004**

(86) Numéro de dépôt international:
**PCT/FR2004/050621**

(87) Numéro de publication internationale:
**WO 2005/052208 (09.06.2005 Gazette 2005/23)**

(54) **ALLIAGE REFRACTAIRE ET PROCEDE DE FABRICATION DE LAINE MINERALE**

FEUERFESTE LEGIERUNG UND VERFAHREN ZUR HERSTELLUNG VON MINERALWOLLE

REFRACTORY ALLOY AND MINERAL WOOL PRODUCTION METHOD

(84) Etats contractants désignés:
**AT BE BG CH CY CZ DE DK EE ES FI FR GB GR HU IE IS IT LI LU MC NL PL PT RO SE SI SK TR**
Etats d'extension désignés:
**HR LV**

(30) Priorité: **26.11.2003 FR 0313890**

(43) Date de publication de la demande:
**16.08.2006 Bulletin 2006/33**

(73) Titulaires:
• **SAINT-GOBAIN ISOVER**
  **92400 Courbevoie (FR)**
• **SAINT-GOBAIN SEVA**
  **71100 Chalon sur Saone (FR)**

(72) Inventeurs:
• **BERNARD, Jean-Luc**
  **F-60600 Clermont (FR)**
• **MICHON, Sylvain**
  **F-71100 Chalon sur Saone (FR)**
• **LIEBAUT, Christophe**
  **F-71640 Saint-Jean de Vaux (FR)**

• **BERTHOD, Patrice**
  **F-54700 Pont a Mousson (FR)**

(74) Mandataire: **Saint-Gobain Recherche**
**Département Propriété Industrielle**
**39 Quai Lucien Lefranc**
**93300 Aubervilliers (FR)**

(56) Documents cités:
**WO-A-01/90429     WO-A-99/16919**
**GB-A- 669 588     US-A- 4 084 964**
**US-A- 4 481 034     US-A- 6 068 814**
**US-B1- 6 266 979**

• **PATENT ABSTRACTS OF JAPAN vol. 018, no. 632 (C-1280), 2 décembre 1994 (1994-12-02) -& JP 06 240392 A (MITSUBISHI MATERIALS CORP), 30 août 1994 (1994-08-30)**
• **PATENT ABSTRACTS OF JAPAN vol. 1997, no. 10, 31 octobre 1997 (1997-10-31) -& JP 09 157780 A (HITACHI LTD; TOHOKU ELECTRIC POWER CO INC), 17 juin 1997 (1997-06-17)**

EP 1 689 904 B1

**Description**

La présente invention concerne un alliage métallique pour utilisation à très haute température, notamment utilisable dans un procédé de fabrication de laine minérale par fibrage d'une composition minérale en fusion, ou plus généralement pour la constitution d'outils doués de résistance mécanique à haute température en milieu oxydant tel que le verre fondu, et des alliages à base de cobalt utilisables à haute température, notamment pour la réalisation d'articles pour l'élaboration et/ou la transformation à chaud du verre ou autre matière minérale, tels que des organes de machines de fabrication de laine minérale.

Une technique de fibrage, dite par centrifugation interne, consiste à laisser tomber continûment du verre liquide à l'intérieur d'un ensemble de pièces de révolution tournant à très grande vitesse de rotation autour de leur axe vertical. Une pièce maîtresse, dénommée « assiette », reçoit le verre contre une paroi dite « bande » percée de trous, que le verre traverse sous l'effet de la force centrifuge pour s'en échapper de toutes parts sous la forme de filaments fondus. Un brûleur annulaire situé au-dessus de l'extérieur de l'assiette, produisant un courant de gaz descendant longeant la paroi extérieure de la bande, dévie ces filaments vers le bas en les étirant. Ceux-ci se « solidifient » ensuite sous la forme de laine de verre.

L'assiette est un outil de fibrage très sollicité thermiquement (chocs thermiques lors des démarrages et arrêts, et établissement en utilisation stabilisée d'un gradient de température le long de la pièce), mécaniquement (force centrifuge, érosion due au passage du verre) et chimiquement (oxydation et corrosion par le verre fondu, et par les gaz chauds sortant du brûleur autour de l'assiette). Ses principaux modes de détérioration sont : la déformation par fluage à chaud des parois verticales, l'apparition de fissures horizontales ou verticales, l'usure par érosion des orifices de fibrage, qui nécessitent le remplacement pur et simple des organes. Leur matériau constitutif se doit donc de résister pendant un temps de production suffisamment long pour rester compatible avec les contraintes techniques et économiques du procédé. On recherche à cet effet des matériaux doués d'une certaine ductilité, de résistance au fluage et résistance à la corrosion et/ou oxydation.

Différents matériaux connus pour la réalisation de ces outils sont des superalliages à base de nickel ou de cobalt renforcés par précipitation de carbures. Des alliages particulièrement réfractaires sont à base de chrome et de cobalt, élément réfractaire qui apporte à la matrice de l'alliage une résistance mécanique intrinsèque à haute température améliorée. Le document JPH06240392 A divulgue un
alliage à base de cobalt de composition (en pourcentage pondéral de l'alliage) 0.22 à 1.2% C, 0.01 à 2% Si et/ou Mn, 22 à 37% Cr, 5 à 15% Ni, 0.1 à 5% Hf, 5 à 12% Ta et/ou Nb et optionnellement du W, Mo, B, Zr, REM dans des quantités spécifiées, le reste étant constitué par du Co et des impuretés inévitables. On connaît ainsi de WO-A-99/16919 un alliage à base de cobalt ayant des propriétés mécaniques améliorées à haute température, comprenant essentiellement les éléments suivants (en pourcentage pondéral de l'alliage) :

| | |
|---|---|
| Cr | 26 à 34% |
| Ni | 6 à 12% |
| W | 4 à 8% |
| Ta | 2 à 4% |
| C | 0,2 à 0,5% |
| Fe | moins de 3% |
| Si | moins de 1% |
| Mn | moins de 0,5% |
| Zr | moins de 0,1 % |

le reste étant constitué par du cobalt et des impuretés inévitables, le rapport molaire du tantale par rapport au carbone étant de l'ordre de 0,4 à 1.

La sélection des proportions en carbone et tantale est destinée à former dans l'alliage un réseau dense mais discontinu de carbures intergranulaires constitués essentiellement par des carbures de chrome sous forme $Cr_7C_3$ et $(Cr,W)_{23}C_6$ et par des carbures de tantale TaC. Cette sélection confère à l'alliage des propriétés mécaniques et de résistance à l'oxydation améliorées à haute température, permettant le fibrage d'un verre fondu dont la température est de 1080°C.

On connaît également de WO 01/90429, des alliages à base de cobalt susceptibles d'être employés à des températures encore plus élevées. Ces alliages présentent un bon compromis entre la résistance mécanique et la résistance à l'oxydation à partir de 1100°C, et avantageusement de 1150°C, grâce à une microstructure dont les zones intergranulaires sont riches en précipités de carbure de tantale. Ces carbures jouent d'une part le rôle d'un renfort mécanique en s'opposant au fluage intergranulaire à très haute température, et d'autre part ont un effet sur la tenue à l'oxydation lié à leur oxydation en $Ta_2O_5$, qui forme des oxydes occupant tout l'ancien volume des carbures TaC empêchant la pénétration du milieu agressif (verre liquide, gaz chauds) dans les espaces intergranulaires. Une quantité suffisante de carbures de tantale est assurée :

- soit avec une teneur en carbone modérée (d'environ 0,3 à 0,55% en poids de l'alliage, de préférence d'environ 0,35 à 0,5%) combinée à une proportion de tantale suffisamment élevée (rapport molaire Ta/C est supérieur ou égal à 0,9, de préférence est d'environ 1 à 1,2) adaptée pour favoriser la formation de carbures TaC au détriment de tous autres carbures ;
- soit avec une teneur en carbone relativement élevée (de l'ordre de 0,8 à 1,2%, de préférence de l'ordre de 0,9 à 1,1%) combinée à une teneur en tantale telle que le rapport molaire tantale au carbone Ta/C inférieur à 0,9 peut alors être aussi faible que 0,3, de préférence 0,35 : la microstructure présente alors un réseau de carbures intergranulaires très dense comprenant des carbures $M_{23}C_6$ qui ont tendance à se dissoudre en solution solide à température élevée supérieure à 1150°C pour ne laisser que les TaC aux joints de grain.

Dans un exemple, l'alliage est employé pour fibrer en conditions industrielles un verre à une température de l'ordre de 1200 à 1240 °C dans l'assiette de fibrage, ce qui provoque une température du métal suivant le profil de l'assiette comprise entre 1160 et 1210 °C. La durée de vie de l'assiette a atteint 390 heures.

Vis-à-vis d'une production industrielle en particulier pour fibrer des verres de type basaltique, il apparaît néanmoins préférable d'assurer une résistance mécanique pour une plage de températures du métal supérieures à 1200°C pour disposer de plus de souplesse dans l'ajustement des conditions de productions.

La présente invention vise à fournir des alliages encore améliorés dont la résistance mécanique à haute température est accrue, permettant de travailler à une température (pour le métal) de 1200 °C ou plus.

A cet égard, l'invention a pour objet un alliage doué de résistance mécanique à haute température en milieu oxydant, ledit alliage étant exempt de molybdène et/ou de tungstène et comprenant une matrice renfermant du chrome renforcée par précipitation de carbures, caractérisé en ce qu'il comprend des carbures d'au moins un métal (M) choisi parmi le titane et le zirconium lesdits carbures contenant en outre du tantale (M'). Par le terme exempt de Mo et/ou de W, il est entendu au sens de la présente description que le pourcentage pondéral de chacun de ces deux éléments dans l'alliage est inférieur à 1%, typiquement inférieur à 0,1% et plus particulièrement que chacun de ces deux éléments est présent sous la forme d'impuretés indésirables.

L'invention repose en effet sur la découverte que des carbures d'un métal autre que le tantale présentent un effet de renforcement très satisfaisant, et peuvent être utilisés en substitution totale ou partielle du carbure de tantale pour améliorer la performance à haute température d'un alliage notamment réfractaire.

Ces carbures des métaux M sélectionnés selon l'invention se caractérisent par une pérennité lors d'exposition longues (quelques centaines d'heures) à haute température, alors que le carbure de tantale subit dans les mêmes conditions d'exposition une fragmentation qui disperse et raréfie les renforts dans le matériau : une partie de ces carbures initialement de morphologie typique « en agrafe » adopte une géométrie sphérique correspondant à l'état thermodynamiquement le plus stable minimisant l'énergie interfaciale carbure - matrice. Cette fragmentation s'accompagne d'une dissolution partielle des carbures dans la matrice.

Comme il a été révélé dans WO 01/90429, la résistance mécanique est le facteur prépondérant dans la durée de vie des assiettes pour des températures de fibrage aussi élevées que 1150-1200°C et plus. Aussi, la résistance à ces températures des précipités de renfort est un élément décisif pour la durée de vie du matériau.

Les carbures de zirconium, hafnium ou titane apportent une très nette amélioration du point de vue de la résistance mécanique à haute température.

De façon tout à fait surprenante, les inventeurs ont en outre constaté que des carbures mixtes, contenant du tantale en plus de l'autre métal M parmi Ti et Zr, sont très stables en température, plus que les carbures ne contenant que du tantale, et que les carbures ne contenant que l'autre métal si ce dernier est Ti ou Zr. Par stabilité vis-à-vis des hautes températures, on entend ici le maintien de la morphologie des carbures, généralement de structure scripte. Ce mode de réalisation constitue un mode tout particulièrement préféré de l'invention, car les alliages qui en résultent démontrent de plus une meilleure résistance à l'oxydation. Le carbure HfC est encore plus stable que les autres carbures MC et que les carbures (Ta,M)C. Ce mode de réalisation est également avantageux mais ne fait pas partie de la présente invention. Ces carbures mixtes présentent une microstructure améliorée à haute température : moins de fragmentation et moins de raréfaction des carbures (Ta,M)C. Mieux, l'addition de Ti aux carbures TaC stabilise tellement ces derniers à haute température que de fins carbures secondaires (Ta,Ti)C, très utiles pour la résistance au fluage intragranulaire, précipitent spontanément dans la matrice (alors que généralement les précipités secondaires obtenus par traitement thermique spécial ont plutôt tendance à disparaître dans les mêmes conditions). Cette stabilité vis-à-vis des hautes températures, rend ces carbures (Ta,Ti)C particulièrement avantageux, bien qu'ils présentent une morphologie un peu différente des carbures MC.

Il est avantageux de priviliégier les carbures (Ta,M)C comme seule phase durcissante, en respectant un rapport des teneurs atomiques du métal (ou de la somme des métaux) au carbone proche de 1, mais pouvant être supérieur, notamment de l'ordre de 0,9 à 2. En particulier un léger écart inférieur à l'unité reste admissible dans le sens que les quelques carbures supplémentaires qui pourraient être générés (carbures de chrome) ne sont pas gênants pour l'ensemble des propriétés à toutes températures. Une plage de rapport avantageuse est de 0,9 à 1,5.

La quantité de carbures (Ta,M)C doit être suffisante pour un bon comportement mécanique à haute température. Pour cela la teneur en carbone (à laquelle est donc liée celle du métal) doit être assez élevée, par exemple égale à 0,6% massique. Cependant on peut descendre jusqu'à 0,2% de carbone en conservant une bonne partie du potentiel de tenue mécanique à chaud.

Des alliages selon l'invention ont une matrice à base de cobalt. Une matrice à base de cobalt garantit simultanément une température de solidus suffisante et un bon comportement à l'oxydation à haute température. Sur ces alliages, la microstructure est formée d'une matrice dendritique de cobalt cristallisé en réseau cubique à faces centrées et d'un composé biphasé eutectique < matrice Co - carbures > présent dans les espaces interdendritiques. La morphologie de cet eutectique consiste en un enchevêtrement intime des carbures et de la matrice. La très bonne cohésion intergranulaire apportée par cet eutectique est très favorable à une très bonne tenue mécanique à très haute température.

L'invention a pour objet un alliage à base de cobalt, comprenant en outre du chrome, du nickel et du carbone, qui se compose des éléments suivants (les proportions étant indiquées en pourcentage pondéral de l'alliage) :

| | |
|---|---|
| Cr | 23 à 34% |
| Ni | 6 à 12% |
| M= Zr ou Ti | 0,2 à 7 % |
| M'= Ta | 0,5 à 7 % |
| C | 0,2 à 1,2% |
| Fe | moins de 3% |
| Si | moins de 1% |
| Mn | moins de 0,5% |

le reste étant constitué par du cobalt et des impuretés inévitables.

Le chrome contribue à la résistance mécanique intrinsèque de la matrice dans laquelle il est présent en partie en solution solide, et dans certains cas aussi sous forme de carbures essentiellement de type $Cr_{23}C_6$ en dispersion fine à l'intérieur des grains où ils apportent une résistance au fluage intragranulaire ou sous forme de carbures de type $Cr_7C_3$ ou $Cr_{23}C_6$ présents aux joints de grains, qui empêchent le glissement grain sur grain contribuant ainsi également au renforcement intergranulaire de l'alliage. Le chrome contribue à la résistance à la corrosion en tant que précurseur d'oxyde de chrome formant une couche protectrice à la surface exposée au milieu oxydant. Une quantité minimale de chrome est nécessaire pour la formation et le maintien de cette couche protectrice. Une teneur en chrome trop élevée est cependant néfaste à la résistance mécanique et à la ténacité aux températures élevées, car elle conduit à une rigidité trop élevée et une aptitude à l'allongement sous contrainte trop faible incompatible avec les contraintes à haute température.

De façon générale, la teneur en chrome d'un alliage utilisable selon l'invention sera de 23 à 34% en poids, de préférence de l'ordre de 26 à 32% en poids, avantageusement d'environ 28 à 30% en poids.

Le nickel, présent dans l'alliage sous forme d'une solution solide en tant qu'élément stabilisant la structure cristalline du cobalt, est utilisé dans la gamme de proportions habituelle de l'ordre de 6 à 12%, avantageusement de 8 à 10% en poids de l'alliage

Le carbone est un constituant essentiel de l'alliage, nécessaire à la formation des précipités de carbures métalliques.

La teneur en carbone détermine directement la quantité de carbures présente dans l'alliage. Elle est d'au moins 0,2% pour obtenir le renfort minimum désiré, mais limitée à au plus 1,2% pour éviter que l'alliage ne devienne dur et difficile à usiner en raison d'une trop grande densité de renforts. Le manque de ductilité de l'alliage à de telles teneurs l'empêche d'accommoder sans se rompre une déformation imposée (par exemple d'origine thermique) et de résister suffisamment à la propagation des fissures.

Les éléments formateurs de carbures sélectionnés selon l'invention présentent les avantages détaillés ci-après.

Le titane étant un élément plus courant et moins coûteux que le tantale, il pénalise donc moins le coût de l'alliage que le tantale des alliages connus. Le fait que cet élément soit léger peut aussi être un avantage.

Une quantité minimale de titane de 0,2 à 5 % en poids de l'alliage semble préférable pour produire une quantité de carbures TiC suffisante, certainement en raison de la solubilité du titane dans la matrice cfc du cobalt. Une teneur en titane de l'ordre de 0,5 à 4% semble avantageuse, notamment 0,6 à 3%.

Le zirconium et le hafnium procurent aux alliages base cobalt renforcés par carbures ZrC ou HfC eutectiques une bonne réfractairité avec une température de solidus qui peut être supérieure à 1300°C. Ils sont aussi dotés d'une très bonne stabilité à haute température, même à des températures telles que 1300°C et durant plusieurs dizaines ou centaines d'heures, avec un phénomène de fragmentation et raréfaction plus limité de ces carbures que celui qui nuit aux propriétés mécaniques des alliages renforcés par carbures TaC.

La quantité de zirconium dans l'alliage peut être de 0,2 à 5, avantageusement de 0,4 à 3%, notamment 0,5 à 1,5%.

Le hafnium apparaît comme un élément très carburigène, qui produit à teneur atomique égale, un réseau de carbures plus dense que le tantale. Ceci est certainement dû au fait que l'enthalpie de formation des carbures HfC est plus faible. Ils se forment donc en plus grande quantité, le hafnium étant d'ailleurs totalement absent de la composition de la matrice.

Les carbures HfC sont très stables et n'évoluent pas après de longues expositions (à partir de 100 heures) à 1200°C : aucune fragmentation ni aucune dissolution dans la matrice n'est en effet observée. L'addition de Hf ne fait pas partie de la présente invention. Un autre intérêt majeur de ces alliages, est leur réfractairité : le gain par rapport à un alliage à renfort de TaC peut atteindre 40 °C sur le point de début de fusion de l'alliage.

Comme il a été dit précédemment, les carbures mixtes où le tantale est remplacé par du Zr ou Ti démontrent une stabilité à haute température améliorée et ceux où Ta est remplacé par Hf excellente.

Le tantale présent dans l'alliage se trouve en partie en solution solide dans la matrice de cobalt dont cet atome lourd distord localement le réseau cristallin et gêne, voire bloque, la progression des dislocations quand le matériau est soumis à un effort mécanique, contribuant ainsi à la résistance intrinsèque de la matrice. La teneur minimale en tantale permettant la formation de carbures mixtes avec le métal M selon l'invention est de l'ordre de 0,5 %, de préférence de l'ordre de 1 % et de manière très préférée de l'ordre de 1,5%, voire 2%. La limite supérieure de la teneur en tantale peut être choisie à environ 7 %. La teneur en tantale est de préférence de l'ordre de 2 à 6%, en particulier de 1,5 à 5%. La teneur en tantale est de manière très préférée inférieure à 5%, voire 4,5% ou même 4%. Une faible quantité de tantale présente le double avantage de diminuer substantiellement le coût global de l'alliage mais également de permettre un usinage facilité dudit alliage. Plus la teneur en tantale est élevée plus l'alliage est dur c'est à dire difficile à mettre en forme.

Quand l'alliage contient simultanément du tantale et du zirconium, il est apparu préférable de maintenir la teneur en zirconium assez basse, pour qu'il agisse en remplacement d'une petite partie du tantale.

L'alliage peut contenir d'autres éléments constitutifs usuels ou impuretés inévitables. Il comporte en général :

- du silicium en tant que désoxydant du métal fondu lors de l'élaboration et du moulage de l'alliage, à raison de moins de 1% en poids ;
- du manganèse également désoxydant, à raison de moins de 0,5% en poids ;
- du fer, en une proportion pouvant aller jusqu'à 3% en poids sans altération des propriétés du matériau ;
- la quantité cumulée des autres éléments introduits à titre d'impuretés avec les constituants essentiels de l'alliage (« impuretés inévitables ») représente avantageusement moins de 1 % en poids de la composition de l'alliage.

Les alliages selon l'invention sont de préférence exempts de Ce, La, B, Y, Dy, Re et autres terres rares.

Les alliages utilisables selon l'invention, qui contiennent des éléments hautement réactifs, peuvent être mis en forme par fonderie, notamment par fusion inductive sous atmosphère au moins partiellement inerte et coulée en moule de sable.

La coulée peut éventuellement être suivie d'un traitement thermique à une température pouvant aller au-delà de la température de fibrage.

L'invention a également pour objet un procédé de fabrication d'un article par fonderie à partir des alliages décrits précédemment comme objet de l'invention.

Le procédé peut comprendre au moins une étape de refroidissement, après la coulée et/ou après ou au courant d'un traitement thermique, par exemple par refroidissement à l'air, notamment avec un retour à la température ambiante.

Le procédé peut comprendre en outre une étape de forgeage après la coulée.

Les alliages objets de l'invention peuvent être utilisés pour fabriquer toutes sortes de pièces sollicitées mécaniquement à haute température et/ou amenées à travailler en milieu oxydant ou corrosif. L'invention a encore pour objets de tels articles fabriqués à partir d'un alliage selon l'invention, notamment par fonderie.

Parmi de telles applications on peut citer notamment la fabrication d'articles utilisables pour l'élaboration ou la transformation à chaud du verre, par exemple des assiettes de fibrage pour la fabrication de laine minérale.

Ainsi l'invention a-t-elle également pour objet un procédé de fabrication de laine de minérale par centrifugation interne, dans lequel on déverse un débit de matière minérale en fusion dans une assiette de fibrage dont la bande périphérique est percée d'une multitude d'orifices par lesquels s'échappent des filaments de matière minérale fondue qui sont ensuite étirés en laine sous l'action d'un gaz, caractérisé en ce que la température de la matière minérale dans l'assiette est d'au moins 1200°C et en ce que l'assiette de fibrage est constituée d'un alliage tel que défini ci-dessus.

Les alliages selon l'invention permettent donc de fibrer du verre ou une composition minérale fondue similaire ayant une température de liquidus $T_{liq}$ de l'ordre de 1130° ou plus, par exemple de 1130 à 1200 °C, notamment 1170°C ou plus.

En général, le fibrage de ces compositions minérales fondues peut être effectué dans une plage de températures (pour la composition fondue parvenant dans l'assiette) comprise entre $T_{liq}$ et $T_{log2,5}$ où $T_{log2,5}$ est la température à laquelle la composition fondue présente une viscosité de $10^{2,5}$ poise (dPa.s), typiquement de l'ordre de 1200°C ou plus, par exemple de 1240 à 1250°C ou plus.

Parmi ces compositions de matière minérale, on peut préférer des compositions renfermant une quantité de fer significative, qui sont moins corrosives vis-à-vis du métal constitutif des organes de fibrage.

Ainsi, le procédé selon l'invention utilise avantageusement une composition de matière minérale oxydante notamment vis-à-vis du chrome, capable de réparer ou reconstituer la couche protectrice d'oxyde $Cr_2O_3$ qui s'établit en surface. A cet égard, on peut préférer des compositions renfermant du fer essentiellement sous forme ferrique (oxyde $Fe_2O_3$), notamment avec un rapport molaire des degrés d'oxydation II et III, exprimé par le rapport $\dfrac{FeO}{FeO + Fe_2O_3}$ de l'ordre de 0,1 à 0,3, notamment 0,15 à 0,20.

Avantageusement, la composition de matière minérale renferme une teneur en fer élevée permettant une cinétique rapide de reconstitution de l'oxyde de chrome avec un taux d'oxyde de fer (taux dit « fer total », correspondant à la teneur totale en fer exprimée conventionnellement sous forme de $Fe_2O_3$ équivalent) d'au moins 3%, de préférence d'au moins 4%, notamment de l'ordre de 4 à 12%, en particulier d'au moins 5%. Dans la plage de redox ci-dessus, cela correspond à une teneur en fer ferrique $Fe_2O_3$ seul d'au moins 2,7%, de préférence au moins 3,6%

De telles compositions sont connues notamment de WO-99/56525 et comprennent avantageusement les constituants suivants :

| | |
|---|---|
| $SiO_2$ | 38-52%, de préférence 40-48% |
| $Al_2O_3$ | 17-23% |
| $SiO_2+Al_2O_3$ | 56-75%, de préférence 62-72% |
| RO (CaO+MgO) | 9-26%, de préférence 12-25% |
| MgO | 4-20%, de préférence 7-16% |
| MgO/CaO | $\geq 0,8$ , de préférence $\geq 1,0$ ou $\geq 1,15$ |
| $R_2O$ ($Na_2O+K_2O$) | $\geq 2\%$ |
| $P_2O_5$ | 0-5% |
| Fer total ($Fe_2O_3$) | $\geq 1,7\%$, de préférence $\geq 2\%$ |
| $B_2O_3$ | 0-5% |
| MnO | 0-4% |
| $TiO_2$ | 0-3% |

D'autres compositions connues de WO-00/17117 se révèlent particulièrement appropriées pour le procédé selon l'invention.

Elles sont caractérisées par les pourcentages pondéraux suivants :

| | | | |
|---|---|---|---|
| $SiO_2$ | 39-55%, | de préférence | 40-52% |
| $Al_2O_3$ | 16-27%, | -- | 16-25% |
| CaO | 3-35%, | -- | 10-25% |
| MgO | 0-15%, | -- | 0-10% |
| $Na_2O$ | 0-15%, | -- | 6-12% |
| $K_2O$ | 0-15%, | -- | 3-12% |
| $R_2O$ ($Na_2O + K_2O$) | 10-17%, | -- | 12-17% |
| $P_2O_5$ | 0-3%, | -- | 0-2% |
| Fer total ($Fe_2O_3$) | 0-15%, | -- | 4-12% |
| $B_2O_3$ | 0-8%, | -- | 0-4% |
| $TiO_2$ | 0-3%, | | |

MgO étant compris entre 0 et 5%, notamment entre 0 et 2% lorsque $R_2O \leq 13,0\%$.

Selon un mode de réalisation, les compositions possèdent des taux d'oxyde de fer compris entre 5 et 12%, notamment entre 5 et 8%, ce qui peut permettre d'obtenir une tenue au feu des matelas de laines minérales.

Bien que l'invention ait été décrite principalement dans ce cadre de la fabrication de laine minérale, elle peut être appliquée à l'industrie verrière en général pour réaliser des éléments ou accessoires de four, de filière, ou de feeder notamment pour la production de fils de verre textile, de verre d'emballage.

En dehors de l'industrie verrière, l'invention peut s'appliquer à la fabrication d'articles très divers, lorsque ceux-ci doivent présenter une résistance mécanique élevée en milieu oxydant et/ou corrosif, en particulier à haute température.

De manière générale, ces alliages peuvent servir à réaliser tout type de pièces fixes ou mobiles en alliage réfractaire servant au fonctionnement ou à l'exploitation d'un four de traitement thermique à haute température (au-delà de 1200°C), d'un échangeur de chaleur ou d'un réacteur de l'industrie chimique. Il peut ainsi s'agir par exemple de pales de ventilateur chaud, de support de cuisson, de matériel d'enfournement... Ils peuvent aussi servir à réaliser tout type de résistance chauffante destinée à fonctionner en atmosphère chaude oxydante, et à réaliser des éléments de turbine, entrant dans des moteurs de véhicule terrestre, maritime ou aérien ou dans toute autre application ne visant pas des véhicules, par exemple des centrales.

L'invention a ainsi pour objet l'utilisation en atmosphère oxydante à une température d'au moins 1200°C d'un article constitué d'un alliage tel que défini précédemment.

L'invention est illustrée par les exemples suivants ainsi que les figures 1 à 3 des dessins annexés sur lesquels :

- la figure 1 représente un diagramme de phases d'une famille d'alliages selon l'invention,
- la figure 2 représente un diagramme de phases d'une famille d'alliages selon l'invention,
- la figure 3 est un graphe illustrant les propriétés mécaniques comparées de différents alliages.

Dans un premier temps, on illustre les alliages non conformes à la présente invention à base de cobalt renforcés par des carbures ne contenant qu'un métal M. Ces exemples 1 à 5 sont regroupés dans le tableau 1 ci-après.

Tableau 1

| Ex | Co | Ni | Cr | C | Hf | Ti | Zr |
|----|------|-----|------|-----|----|-----|----|
| 1 | Base | 8,7 | 28,4 | 0,4 | 6 | - | - |
| 2 | Base | 8,7 | 28,4 | 0,4 | 3 | - | - |
| 3 | Base | 8,7 | 28,4 | 0,4 | - | 1,6 | - |
| 4 | Base | 8,7 | 28,4 | 0,4 | - | 3 | - |
| 5 | Base | 8,7 | 28,4 | 0,4 | - | - | 3 |

teneurs en % massiques

La microstructure de ces alliages contenant des carbures de niobium, zirconium ou hafnium est visuellement très proche de celle d'un alliage similaire contenant des carbures de tantale (alliage comparatif défini ci-après). Ces éléments forment des carbures eutectiques de morphologie "scripte" a priori favorable à une bonne cohésion intergranulaire.

Quand on expose les alliages des exemples 1 et 2 à une température de 1200°C pendant une longue durée, typiquement 100 heures, leurs microstructures ne sont quasiment pas perturbées et les carbures peuvent donc continuer à jouer leur rôle de renfort. En plus de cette stabilité microstructurale, ces alliages présentent un réseau de carbures de densité semblable à celui de l'alliage comparatif en introduisant moins d'élément carburigène. De plus on observe un le gain de réfractairité important : le point de début de fusion de l'alliage de l'exemple 1 est de 1374°C et celui de l'exemple 2 est de 1380°C contre 1338°C pour l'alliage comparatif.

En ce qui concerne les alliages des exemples 3 et 4 contenant des carbures de titane, les microstructures obtenues sont également satisfaisantes, les TiC semblent pouvoir assurer une bonne cohésion intergranulaire grâce à leur géométrie scripte tout à fait comparable à celle des TaC de l'alliage comparatif. La microstructure est assez stable, avec pour l'exemple 4 où le rapport atomique Ti/C est supérieur à 1, une raréfaction des carbures plus faible que celle des TaC de l'alliage comparatif.

L'alliage de l'exemple 5 se caractérise aussi par une certaine stabilité microstructurale après 100h à 1200°C, un peu moins bonne toutefois que celle des alliages des exemples 1 et 2.

Dans un deuxième temps, on illustre les alliages à base de cobalt renforcés par des carbures contenant simultanément du titane et du tantale.

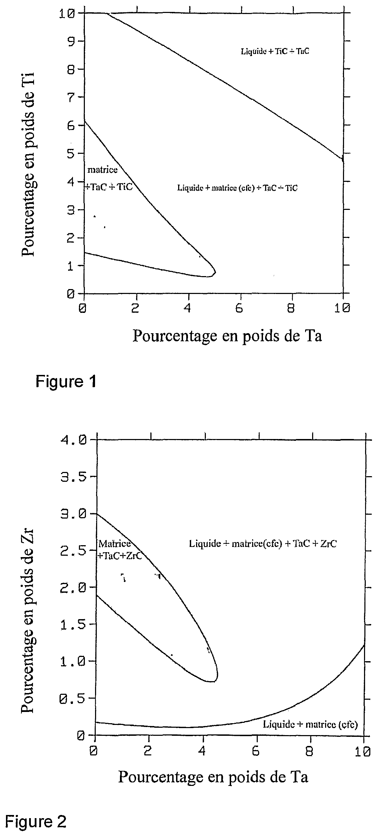

On a déterminé à partir de données expérimentales et de modélisation des diagrammes de phase du système, dont un est illustré sur la figure 1. Le diagramme représente, pour une température donnée (coupe isotherme à 1300°C), les phases qui seraient observées en fonction des teneurs massiques en titane et tantale dans des alliages base cobalt -TaTiC (dont la composition comprend de façon constante les éléments suivants en %massiques : Cr = 28,34; Ni = 8,68; C=0,4). Le but est de déterminer les domaines de concentrations en ces deux métaux donnant une température de solidus la plus élevée possible pour le matériau. Ce diagramme révèle un domaine entièrement solide très restreint (matrice + TaC + TiC). On choisit dans ce domaine de compositions les exemples suivants.

EXEMPLE 6 (selon l'invention)

On prépare un alliage de la composition suivante :

|               |              |        |
|---------------|--------------|--------|
|               | Cr           | 28,4%  |
|               | Ni           | 8,7%   |
|               | C            | 0,4%   |
|               | Ti           | 1,5 %  |
|               | Ta           | 3%     |
| résiduels :   | Fe           | < 3 %  |
|               | Si           | < 1%   |
|               | Mn           | < 0,5% |
|               | Zr           | < 0,1% |
|               | autres sommés| < 1%   |

le reste étant constitué par du cobalt.

La stabilité thermique de cette microstructure a été mise en évidence par le traitement suivant : un échantillon d'alliage est porté pendant 100 heures à la température de 1200°C, après quoi on réalise une trempe à l'eau pour figer la microstructure.

On observe la structure de l'échantillon au microscope électronique à balayage. Cette observation montre que la structure des joints de grains contient des carbures (Ta,Ti)C distribués en un réseau dense et révèle également la précipitation dans la matrice de fins carbures secondaires (Ta,Ti)C, très utiles pour la résistance au fluage intragranulaire. Cette microstructure n'a pas été affectée par l'exposition à haute température (100h à 1200°C) : les carbures TaC contenant du titane sont parfaitement stables, plus que les TaC de l'alliage à renfort par carbures de tantale de l'exemple comparatif. Ces carbures TaC contenant Ti constituant la majeure partie des carbures ont une microstructure quasi-imperturbable à haute température : très peu de fragmentation et de raréfaction des carbures (Ta,Ti)C.

Les essais démontrent une très grande réfractairité de ces carbures dont la température de solidus avoisine les 1350°C.

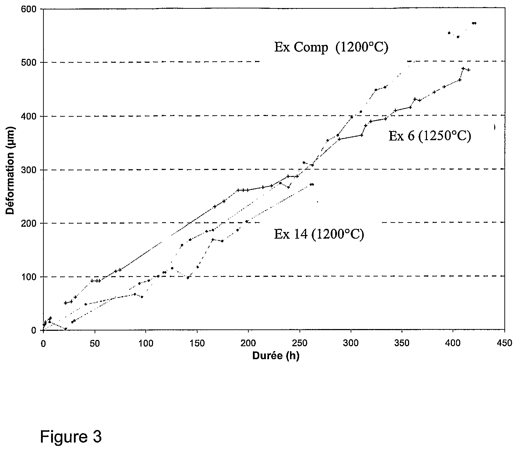

Les propriétés de résistance mécanique à haute température de l'alliage ont été évaluées dans des essais de tenue au fluage en flexion trois points à la température de 1250°C sous une charge de 31 MPa. Les essais ont porté sur une éprouvette parallélépipédique de 30 mm de large et de 3 mm d'épaisseur, la charge étant exercée au milieu d'un entraxe de 37 mm. On suit la déformation de l'éprouvette en fonction du temps comme représenté sur le graphe de la figure 3. La résistance mécanique est généralement exprimée par la vitesse de fluage.

L'alliage se déforme à une vitesse de croissance de flèche de 1,1 $\mu$m.h$^{-1}$ contre 3,5 $\mu$m.h$^{-1}$ pour l'alliage de l'exemple comparatif 100%TaC : Les propriétés de résistance à l'oxydation ont été évaluées dans des essais de thermogravimétrie à 1200°C : on obtient une constante parabolique d'oxydation $K_p$ de 190.10$^{-12}$ contre 96,5.10$^{-12}$ g$^2$.cm$^{-4}$.s$^{-1}$ pour l'alliage de l'exemple comparatif.

Le comportement en oxydation est relativement peu dégradé vis-à-vis de l'alliage comparatif, dans une mesure qui n'est pas pénalisante dans ce domaine de températures où c'est la résistance mécanique qui fait la qualité du matériau. Le bilan de ces deux propriétés est donc ici largement en faveur de l'alliage de l'exemple 6.

Tableau 2

| EX | Co    | Ni  | Cr   | C   | Ti  | Ta |
|----|-------|-----|------|-----|-----|----|
| 6  | reste | 8,7 | 28,3 | 0,4 | 1,5 | 3  |
| 7  | reste | 8,7 | 28,3 | 0,4 | 1   | 4  |

teneurs en % massiques

EXEMPLE 7 (selon l'invention)

Un autre alliage du même type est préparé avec une composition qui diffère de celle de l'exemple 6 comme indiqué au tableau 2 .

Sa microstructure est semblable à celle de l'exemple 6.

Les propriétés de résistance mécanique à haute température de l'alliage ont été évaluées dans des essais de tenue au fluage en flexion trois points à la température de 1250°C sous une charge de 31 MPa, comme précédemment. La vitesse de fluage est de 3,2 $\mu$m.h$^{-1}$, ce qui représente déjà un gain de 10% par rapport à l'alliage de l'exemple comparatif.

Le comportement à l'oxydation par thermogravimétrie se fait pour cet exemple 2 guère plus vite que pour l'alliage de l'exemple comparatif avec une constante parabolique Kp = 136.10$^{-12}$ g$^2$.cm$^{-4}$.s$^{-1}$ sur 100 heures à 1200°C contre 96,5.10$^{-12}$ g$^2$.cm$^{-4}$.s$^{-1}$ pour l'alliage de l'exemple comparatif.

Des tests thermogravimétriques réalisés à 1300°C montrent la subsistance d'un comportement sain en oxydation avec toujours une allure parabolique et des constantes multipliées par 6, ce qui est très raisonnable pour une température d'essai située juste quelques dizaines de degrés en dessous du solidus.

Ces alliages 6 et 7 ont aussi été testés en oxydation cyclique à l'air. Ces tests consistent en 10 cycles formés chacun d'une montée à 1200°C, suivie d'un palier de 24 heures, puis d'un refroidissement à l'air et de la pesée de l'échantillon avec calcul de la perte surfacique de masse. Les alliages 6 et 7 se comportent quasiment aussi bien que l'alliage de l'exemple comparatif.

EXEMPLE COMPARATIF

On reproduit l'alliage de l'exemple 1 de WO 01/90429 de la composition suivante :

|  |  |  |
|---|---|---|
| | Cr | 28,3% |
| | Ni | 8,68% |
| | C | 0,37% |
| | Ta | 5,7% |
| | W | 0% |
| Résiduels : | Fe | < 3% |
| | Si | < 1 % |
| | Mn | < 0,5% |
| | Zr | < 0,1% |
| | autres sommés | < 1% |

le reste étant constitué par du cobalt.

Cet alliage se caractérise par un renfort par une phase intergranulaire composée exclusivement de carbures de tantale.

La résistance mécanique est illustrée sur la figure 3 , où l'on a représenté la déformation de l'alliage en fluage 3 points sous 31 MPa à une température de 1200°C. On constate une similitude avec les propriétés obtenues avec l'alliage de l'exemple 6 mais à la température de 1250°C pour ce dernier.

On illustre ensuite les alliages à base de cobalt renforcés par des carbures contenant à la fois zirconium et tantale.

On a déterminé à partir de données expérimentales et de modélisation des diagrammes de phase du système, dont un est illustré sur la figure 2. Le diagramme représente, pour une température donnée (coupe isotherme à 1300°C), les phases qui seraient observées en fonction des teneurs massiques en tantale et zirconium dans des alliages base cobalt-TaZrC (dont la composition comprend de façon constante les éléments suivants en %$_{massiques}$ : Cr = 28,34; Ni = 8,68; C=0,4). Le but est de déterminer les domaines de concentrations en ces deux métaux donnant une température de solidus la plus élevée possible pour le matériau. Ce diagramme révèle un domaine entièrement solide très restreint (matrice + TaC + ZrC). On choisit dans ce domaine de compositions les exemples suivants.

EXEMPLES 8 à 12 (selon l'invention)

Les essais réalisés sur les différents alliages élaborés, dont le tableau 3 ci-dessous donne les compositions chimiques, montrent que l'on combine ainsi les avantages liés aux ZrC (réfractairité, excellente stabilité microstructurale) et ceux liés aux TaC (coût d'élaboration plus bas et excellentes propriétés en oxydation à haute température).

Tableau 3

| EX | Co | Ni | Cr | C | Zr | Ta |
|----|-------|-----|------|------|-----|-----|
| 8 | reste | 8,7 | 28,4 | 0,4 | 2 | 2 |
| 9 | reste | 8,7 | 28,4 | 0,4 | 1,5 | 3 |
| 10 | reste | 8,7 | 28,4 | 0,4 | 1 | 4 |
| 11 | reste | 8,7 | 28,4 | 0,37 | 0,5 | 5,8 |
| 12 | reste | 8,7 | 28,4 | 0,37 | 0,5 | 5,0 |

teneurs en % massiques

La réfractairité de ces alliages a été testée en analyse thermique différentielle ATD afin de pouvoir la comparer à celle de l'exemple comparatif. Le point de début de fusion de l'alliage est en général d'au moins 1350°C, notamment de 1366°C pour l'alliage de l'exemple 8 contre 1340°C pour l'exemple comparatif.

La microstructure de ces alliages est intéressante.

On remarque une plus grande stabilité structurale pour l'alliage de l'exemple 11 que pour l'alliage comparatif : on observe toujours les enchevêtrements de carbures au bout de 100 heures à 1200°C.

Par exemple, l'alliage de l'exemple 11 présente un dense réseau interdendritique de carbures mixtes ZrC-TaC plus stable et se fragmentant moins même pendant 100 heures à 1200°C, garantie d'une meilleure tenue mécanique, ainsi qu'un comportement à l'oxydation étant équivalent à celui de l'alliage de l'exemple comparatif (Kp = 93,6.10$^{-12}$ g$^2$.cm$^{-4}$.s$^{-1}$ sur 100 heures à 1200°C contre 96,5.10$^{-12}$ g$^2$.cm$^{-4}$.s$^{-1}$ pour l'alliage renforcé TaC).

On illustre enfin les alliages à base de cobalt renforcés par des carbures contenant à la fois hafnium et tantale.

Exemples 13 à 15 (non conformes à l'invention)

Tableau 4

| Ex | Co | Ni | Cr | Ta | Hf | C |
|----|------|-----|------|----|----|-----|
| 13 | Bal. | 8,7 | 28,4 | 2 | 4 | 0,4 |
| 14 | Bal. | 8,7 | 28,4 | 3 | 3 | 0,4 |
| 15 | Bal. | 8,7 | 28,4 | 4 | 2 | 0,4 |

teneurs en % massiques

Ces alliages possèdent des rapports (Hf + Ta)/C égaux à 1.

Le réseau de carbures obtenu pour ces trois alliages a une morphologie intéressante, d'autant plus que la quantité de hafnium est plus importante que celle de tantale.

Une très bonne stabilité structurale est observée pour ces alliages. Le réseau de carbures paraît intact au bout de 100 heures à 1200°C.

La réfractairité de ces alliages a été testée en analyse thermique différentielle ATD afin de pouvoir la comparer à celle de l'exemple comparatif. Le point de début de fusion de l'alliage de l'exemple 13 est ainsi de 1382°C, et pour l'exemple 14 de 1366°C contre 1340°C pour l'exemple comparatif. Le fait de substituer la moitié du tantale par du hafnium augmente donc son point de début de fusion d'au moins 26°C, ce qui est non négligeable.

Les propriétés de résistance mécanique à haute température de l'alliage de l'exemple 14 ont été évaluées dans des essais de tenue au fluage en flexion trois points à la température de 1200°C sous une charge de 31 MPa. Les résultats sont reportés sur la figure 3.

Bien que le comportement de l'alliage soit proche de celui de l'exemple comparatif dans un premier temps de l'essai, on remarque que la courbe de déformation s'écarte ensuite sensiblement de la courbe suivie par l'alliage de l'exemple comparatif.

**Revendications**

1. Alliage doué de résistance mécanique à haute température en milieu oxydant, le pourcentage pondéral de chacun des éléments molybdène et/ou tungstène dans l'alliage étant inférieur à 1% et comprenant une matrice renfermant du chrome renforcée par précipitation de carbures, **caractérisé en ce qu'**il comprend des carbures d'au moins un métal (M) choisi parmi le titane et le zirconium, lesdits carbures contenant en outre du tantale (M') **et en ce qu'**il se compose essentiellement des éléments suivants, les proportions étant indiquées en pourcentage pondéral de l'alliage :

| | |
|---|---|
| Cr | 23 à 34% |
| Ni | 6 à 12% |
| M= Zr ou Ti | 0,2 à 7% |
| M'= Ta | 0,5 à 7% |
| C | 0,2 à 1,2 % |
| Fe | moins de 3% |
| Si | moins de 1% |
| Mn | moins de 0,5% |

le reste étant constitué par du cobalt et des impuretés inévitables.

2. Alliage selon la revendication 1, **caractérisé en ce qu'**il comprend au moins 0,2%, notamment au moins 0,6%, en poids de carbone.

3. Alliage selon l'une des revendications précédentes, **caractérisé en ce qu'**il comprend les métaux M et M', dans un rapport molaire au carbone (M+M')/C de 0,9 à 2, en particulier de 0,9 à 1,5.

4. Alliage selon l'une des revendications précédentes, **caractérisé en ce qu'**il comprend 0,2 à 5 % en poids de titane, de préférence 0,4 et 5%.

5. Alliage selon l'une des revendications précédentes, **caractérisé en ce qu'**il comprend 0,2 à 5 % en poids de zirconium, de préférence 0,4 à 3%.

6. Alliage selon l'une des revendications précédentes, **caractérisé en ce que** la teneur en tantale est de 1 à 7%, en particulier de 2 à 6%.

7. Alliage selon l'une des revendications précédentes, **caractérisé en ce que** la teneur en chrome est de 26 à 32% en poids et la teneur en Ni est de 8 à 10% en poids.

8. Article, notamment article utilisable notamment pour l'élaboration ou la transformation à chaud du verre, réalisé en un alliage selon l'une quelconque des revendications 1 à 7, notamment par fonderie.

9. Article selon la revendication 8 ayant subi un forgeage après coulée de l'alliage.

10. Article selon l'une des revendications 8 ou 9, consistant en une assiette de fibrage pour la fabrication de laine minérale.

11. Procédé de fabrication d'un article selon la revendication 8 à 10, comprenant la coulée de l'alliage fondu dans un moule approprié.

12. Procédé de fabrication de laine minérale par centrifugation interne, dans lequel on déverse un débit de matière minérale en fusion dans une assiette de fibrage dont la bande périphérique est percée d'une multitude d'orifices par lesquels s'échappent des filaments de matière minérale fondue qui sont ensuite étirés en laine sous l'action d'un gaz, **caractérisé en ce que** la température de la matière minérale dans l'assiette est d'au moins 1200°C et **en ce que** l'assiette de fibrage est constituée d'un alliage à base de cobalt selon l'une des revendications 1 à 7.

13. Procédé selon la revendication 12, **caractérisé en ce que** la matière minérale fondue a une température de liquidus de 1130°C ou plus, notamment de 1170°C ou plus.

**Patentansprüche**

1. Legierung mit mechanischer Festigkeit bei hoher Temperatur in oxidierender Umgebung, wobei der Gewichtsprozentsatz jedes der Elemente Molybdän und/oder Wolfram in der Legierung kleiner als 1 % ist, und wobei die Legierung eine Chrom einschließende, durch Carbidausscheidung verstärkte Matrix umfasst, **dadurch gekennzeichnet, dass** sie Carbide mindestens eines Metalls (M) umfasst, das aus Titan und Zirkonium ausgewählt ist, wobei die Carbide ferner Tantal (M') enthalten, **und dass** sie sich im Wesentlichen aus den folgenden Elementen zusammensetzt, wobei die Anteile in Gewichtsprozent der Legierung angegeben sind:

   | | |
   |---|---|
   | Cr | 23 bis 34 % |
   | Ni | 6 bis 12 % |
   | M = Zr oder Ti | 0,2 bis 7 % |
   | M'= Ta | 0,5 bis 7 % |
   | C | 0,2 bis 1,2 % |
   | Fe | unter 3 % |
   | Si | unter 1 % |
   | Mn | unter 0,5 % |

   wobei der Rest von Cobalt und den unvermeidbaren Verunreinigungen gebildet ist.

2. Legierung nach Anspruch 1, **dadurch gekennzeichnet, dass** sie mindestens 0,2 Gew.-%, insbesondere mindestens 0,6 Gew.-%, Kohlenstoff umfasst.

3. Legierung nach einem der vorangehenden Ansprüche, **dadurch gekennzeichnet, dass** sie die Metalle M und M' in einem molaren Verhältnis zu Kohlenstoff (M+M')/C von 0,9 zu 2, insbesondere von 0,9 zu 1,5, umfasst.

4. Legierung nach einem der vorangehenden Ansprüche, **dadurch gekennzeichnet, dass** sie 0,2 bis 5 Gew.-%, vorzugsweise 0,4 und 5 %, Titan umfasst.

5. Legierung nach einem der vorangehenden Ansprüche, **dadurch gekennzeichnet, dass** sie 0,2 bis 5 Gew.-%, vorzugsweise 0,4 bis 3 %, Zirkonium umfasst.

6. Legierung nach einem der vorangehenden Ansprüche, **dadurch gekennzeichnet, dass** der Gehalt an Tantal 1 bis 7 %, insbesondere 2 bis 6 %, beträgt.

7. Legierung nach einem der vorangehenden Ansprüche, **dadurch gekennzeichnet, dass** der Gehalt an Chrom 26 bis 32 Gew.-% und der Gehalt an Ni 8 bis 10 Gew.-% beträgt.

8. Artikel, insbesondere Artikel, insbesondere verwendbar für die Verarbeitung oder die Warmumformung von Glas, realisiert in einer Legierung nach einem der Ansprüche 1 bis 7, insbesondere durch Gießen.

9. Artikel nach Anspruch 8, der nach dem Gießen der Legierung geschmiedet wurde.

10. Artikel nach einem der Ansprüche 8 oder 9, bestehend aus einer Zerfaserungsscheibe für die Herstellung von Mineralwolle.

11. Verfahren zur Herstellung eines Artikels nach Anspruch 8 bis 10, umfassend das Gießen der geschmolzenen Legierung in eine geeignete Form.

12. Verfahren zur Herstellung von Mineralwolle durch innere Zentrifugierung, wobei eine Menge geschmolzenen mineralischen Materials in eine Zerfaserungsscheibe gegossen wird, deren umlaufende Kante von einer Vielzahl von Öffnungen durchbrochen ist, durch welche Filamente geschmolzenen mineralischen Materials entweichen, die danach unter der Einwirkung eines Gases zu Wolle verstreckt werden, **dadurch gekennzeichnet, dass** die Temperatur des mineralischen Materials in der Scheibe mindestens 1.200 °C beträgt und dass die Zerfaserungsscheibe aus einer Legierung auf der Basis von Kobalt nach einem der Ansprüche 1 bis 7 gebildet ist.

13. Verfahren nach Anspruch 12, **dadurch gekennzeichnet, dass** das geschmolzene mineralische Material eine Liquidustemperatur von 1.130 °C oder darüber, insbesondere von 1.170 °C oder darüber, hat.

**Claims**

1. An alloy endowed with high-temperature mechanical strength in an oxidizing medium, the percentage weight content of each of the elements molybdenum and/or tungsten in the alloy being less than 1% and comprising a chromium-containing matrix strengthened by precipitation of carbides, **characterized in that** it comprises carbides of at least one metal (M) chosen from titanium and zirconium, said carbides further containing tantalum (M'), and **in that** it is essentially composed of the following elements, the proportions being indicated in percentages by weight of the alloy:

| | |
|---|---|
| Cr | 23 to 34% |
| Ni | 6 to 12% |
| M = Zr or Ti | 0.2 to 7% |
| M' = Ta | 0.5 to 7% |
| C | 0.2 to 1.2% |
| Fe | less than 3% |
| Si | less than 1% |
| Mn | less than 0.5%, |

the balance consisting of cobalt and inevitable impurities.

2. The alloy as claimed in claim 1, **characterized in that** it comprises at least 0.2%, especially at least 0.6%, carbon by weight.

3. The alloy as claimed in one of the preceding claims, **characterized in that** it comprises the metal M, and M', in a metal/carbon molar ratio (M + M')/C of around 0.9 to 2, in particular 0.9 to 1.5.

4. The alloy as claimed in one of the preceding claims, **characterized in that** it comprises 0.2 to 5%, preferably around 0.4 to 5%, titanium by weight.

5. The alloy as claimed in one of the preceding claims, **characterized in that** it comprises 0.2 to 5%, preferably around 0.4 to 3%, zirconium by weight.

6. The alloy as claimed in one of the preceding claims, **characterized in that** the tantalum content is from 1 to 7%, in particular from 2 to 6%.

7. The alloy as claimed in one of the preceding claims, **characterized in that** the chromium content is from 26 to 32% and the nickel content is from 8 to 10% by weight.

8. An article, especially an article that can be used in particular for the hot smelting or conversion of glass, made of an alloy as claimed in any one of claims 1 to 7, especially by casting.

9. The article as claimed in claim 8 that has undergone a forging operation after the alloy has been cast.

10. The article as claimed in either of claims 8 and 9, which consists of a fiberizing spinner for the manufacture of mineral wool.

11. A process for manufacturing an article as claimed in claims 8 to 10, comprising the casting of the molten alloy in a suitable mold.

12. A process for manufacturing mineral wool by internal centrifugation, in which a stream of molten mineral material is poured into a fiberizing spinner, the peripheral band of which is pierced by a multitude of orifices via which filaments of molten mineral material escape that are then attenuated through the action of a gas into wool, **characterized in that** the temperature of the mineral material in the spinner is at least 1200°C and **in that** the fiberizing spinner is made of a cobalt-based alloy as claimed in one of claims 1 to 7.

13. The process as claimed in claim 12, **characterized in that** the molten mineral material has a liquidus temperature of around 1130°C or higher, especially 1170°C or higher.

Figure 1

Figure 2

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP H06240392 A
- WO 9916919 A
- WO 0190429 A
- WO 9956525 A
- WO 0017117 A